(19) Europäisches Patentamt
European Patent Office
Office européen des brevets

(11) **EP 2 106 112 A1**

(12) **EUROPEAN PATENT APPLICATION**

(43) Date of publication:
**30.09.2009 Bulletin 2009/40**

(51) Int Cl.:
***H04M 3/42*** *(2006.01)*

(21) Application number: **08251040.5**

(22) Date of filing: **25.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **British Telecommunications Public Limited Company**
**London EC1A 7AJ (GB)**

(72) Inventor: **The designation of the inventor has not yet been filed**

(74) Representative: **Lau, Chi-Fai et al**
**British Telecommunications plc**
**Intellectual Property Department, PPC5A**
**BT Centre**
**81 Newgate Street**
**London EC1A 7AJ (GB)**

(54) **Feature-based service configuration**

(57) A method of configuring a feature subscription having the steps of: a) retrieving a feature subscription, the feature subscription comprising one or more features; b) configuring the feature subscription; c) determining one or more consistent solutions of the feature subscription configured in step b); and d) selecting a consistent solution from the one or more consistent solutions determined in step c).

Figure 3

**Description**

The present invention relates to a method of
Information and communication services, from newsfeeds to internet telephony, are playing an increasing, and potentially disruptive, role in our lives. As a result, service providers seek personalisation solutions to allow customers control and enhance the way digital services are delivered; for example, call control has received much attention in Plain-Old Telephony Service and Intelligent Network environments. An outcome of that work is the emergence of features as fundamental primitives for personalisation.

A feature is an increment of functionality which modifies the basic service behaviour, e.g., call-divert-on-busy, multimedia ring back tone, interactive voice response, find-me, etc. Features are optional and must be activated to fulfil their role. Once activated, they execute automatically (e.g., call-logging) or interactively (e.g., call-transfer). Service personalisation refers to the problem of selecting which features should be active and when. In this context, a challenge is to provide effective tool support to service subscribers.

Any personalisation capability is intrinsically dependent on the way features are realised in the underlying service application architecture. Modern architectures, notably those based on the Session Initiation Protocol, are user-centric and delegate control over the selection and composition of applications. The management of interactions between applications remains incomplete or restrictive.

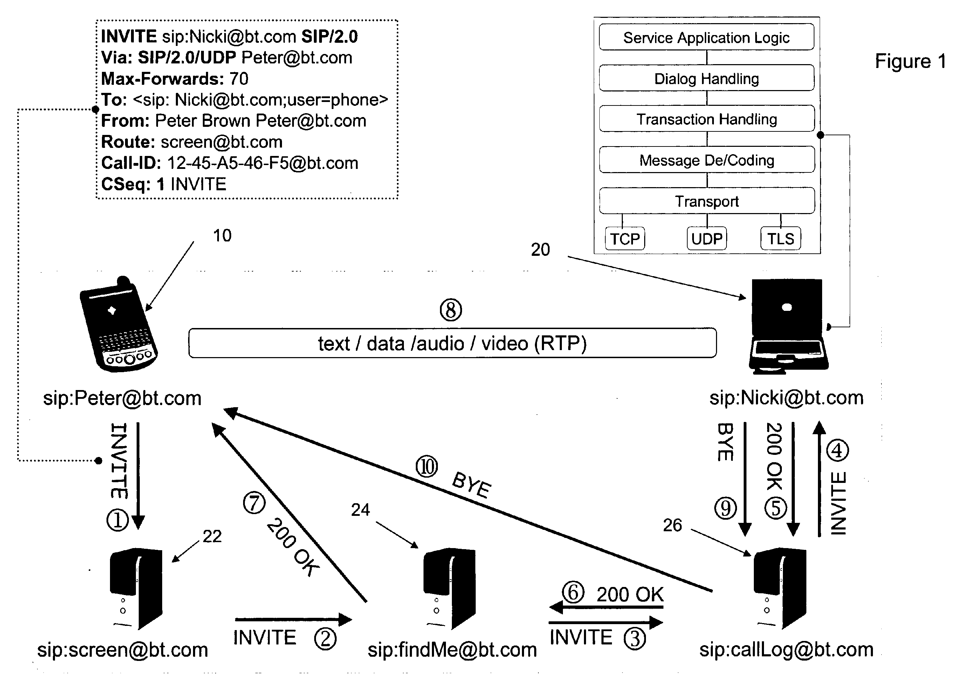

Figure 1 shows a schematic depiction of a SIP architecture in which a multimedia session is established between a first terminal 10 and a second terminal 20. SIP is an application layer signalling protocol used to establish, modify and terminate multimedia sessions. It underpins services as different as IP telephony, instant messaging, conferencing, presence awareness, IP-TV, video gaming or home appliance control. SIP is text-based and its messages can be transported with the Transmission Control Protocol (TCP/IP). It also relies on media protocols like the Real-Time Transport Protocol (RTP) to carry text, voice, video and data between endpoints.

The SIP specification prescribes an abstract architecture comprising entities such as user agents, proxy servers and registrars. Proxy servers route messages between user agents and dialogs are set up, modified, and terminated through series of requestresponse transactions between adjacent entities on the connection path. Referring to Figure 1, an INVITE message is sent from first terminal 10 to second terminal 20 via first server 22, second server 24 and third server 26; the INVITE message is an invitation to open a session between the terminals and the second terminal responds with an OK message. The OK message is routed via the third server 26 and the second server 24. The communication session between the first and second terminal is opened in response to the receipt of the OK message. Subsequently, the second terminal sends a BYE message to the first terminal to terminate the communication session. The BYE message is routed to the first server via the third server 26. It can be seen that the there is a dynamic chaining of entities during the dialog setup phase; this style of composition is known as composition-by-proxying

Various capabilities have been proposed to program or exert control over SIP entities. SIP scripting languages, for instance, allow one to specify fine-grained call control rules in the form of scripts combining conditions and actions. Scripts are uploaded to devices or application servers and interpreted by embedded engines at runtime. Examples of this approach include CPL and LESS. An alternative is SIP APIs; the SIP servlet API, for instance, provides real-time and operational control over the invocations of SIP servlets. The scope of these capabilities remain limited to the devices and servers where scripts, policies, rules or servlets are deployed.

DFC is a virtual network architecture with its own signalling and media protocols. It applies a SIP-like composition-by-proxying style and, similarly to the IMS, uses dedicated routers to invoke and sequence the features subscribed by session participants. Feature subscriptions are sequences of features constructed from structured sets of features which are referred to as catalogues. Catalogues comprise feature interaction resolution constraints which are formulated by designers and enforced on subscriptions at configuration time. These constraints avoid undesirable feature interactions and enable desirable ones at run-time.

A dialog is set up in a DFC network by chaining run-time entities, known as boxes, between two endpoints. The resulting chain, known as a usage, is built incrementally and dynamically by routing a setup request that is generated by an interface box (i.e., a box interfacing with a device, a gateway or a media server) through a sequence of feature boxes to another interface box. This process is carried out using interchangeable and stateless routers. DFC routers act as proxies for boxes, that is, any setup request sent by a box goes through a router which processes and forwards it to the next box.

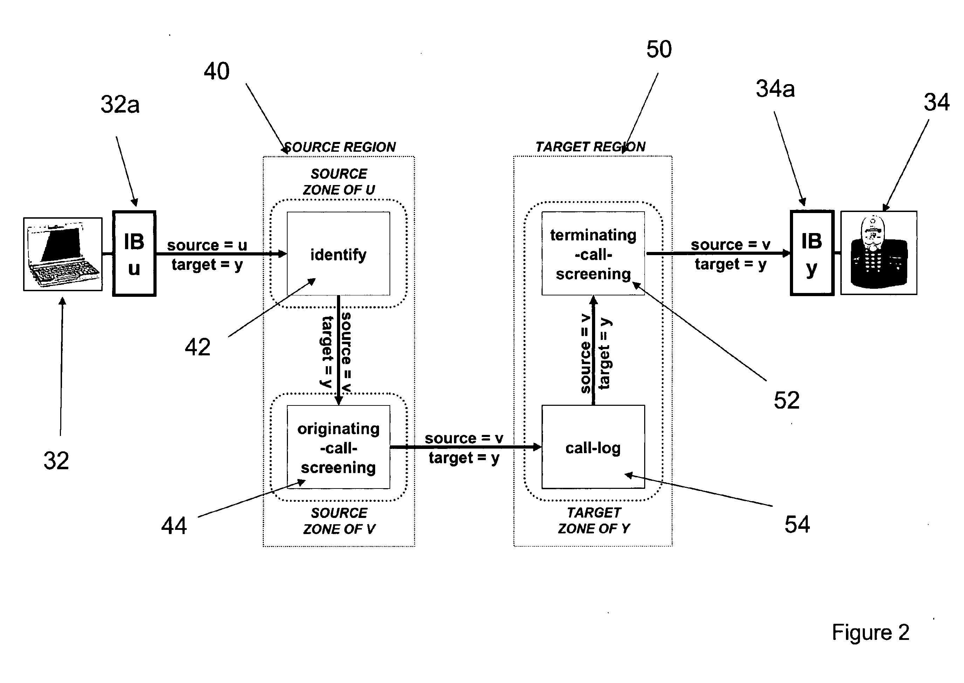

Figure 2 shows a schematic depiction of a call being routed between a first terminal 32 and a second terminal 34. The first and second terminals comprise a respective interface box, first interface box 32a and second interface box 34a. A setup request contains amongst other fields a source address, a target address, a routing region (see below) and a route, i.e., a sequence of box types to route the request to. These fields capture the state of a setup in progress and enable stateless routers to act in a coordinated way when constructing a usage end-to-end. The routers logically partition each usage into a source region 40 and a target region 50 and a region comprising one or more contiguous zones. A source zone is a sequence of feature boxes running on behalf of the same address in the source region.

Similarly, a target zone is a sequence of feature boxes running on behalf of the same address in the target region.

The routing process starts with the construction of the source zone corresponding to the address originating the call. Any feature box included in the source zone may change the source address encapsulated in the incoming setup request at its discretion (e.g., an identification feature). If so, a new zone corresponding to the resulting source address is constructed. The process iterates until the source region is exhausted. The construction of the first target zone then starts using the target address. Again, a change of target address performed by a feature box triggers the construction of a new target zone (e.g., a location feature). Eventually, the target region is exhausted and an interface box associated to the target address is reached.

The way an interface or feature box populates an outgoing setup message depends on whether it initiates a new call, continues a setup request or places a new call relating to a previous usage. A router, on the other hand, deterministically transforms the requests it receives. Specifically, it unfolds or reinitialises the route, preserves or advances the region from *source* to *target* and ultimately chooses the box to send the request to. As discussed above, the route is reinitialised when a new zone must be constructed after a change of address or region. If so, it is set to the sequence of feature box types (FBT) the source address has subscribed to if the source region is the current region or that the target address has subscribed to otherwise. This is the mechanism by which subscribers control the setup of usages.

FBT are implementation modules deployed as feature boxes in a network. Their deployment is constrained by the fact that feature boxes such as call-waiting have to be persistent and bound to the same address over time. For this reason, DFC classifies FBT as *bound* or *free.* Routers use this information to look up features boxes from FBT and subscription addresses when proxying requests. DFC also distinguishes between *source FBT* such as originating-call-screening and *target FBT* such as terminating-call-screening based on their routing region. DFC classifies some of the FBT that are both source and target as *reversible.* Reversible FBT include FBT such as mid-call-move that can initiate calls in the context of existing dialogs and bound FBT such as call-waiting that must be routed in the source and target regions.

The DFC approach to feature interaction management relies on the formulation of binary precedence constraints over FBT when creating catalogues and their subsequent enforcement when creating subscriptions. These constraints are formulated by designers who analyse all possible pairs of FBT in each region and determine those that are prone to interactions. For each pair, this involves determining which routing order, if any, could lead to an interaction during a session. Any uncovered interaction is then resolved, i.e., avoided or enabled according to its desirability, by formulating a precedence constraint between the two FBT. The resulting set of constraints form two irreflexive binary relations, one defined over the set of source FBT which we refer to as the source precedence relation, one defined over the set of target FBT which we refer to as the target precedence relation.

On this basis, a catalogue is defined as a set of FBT, their attributes (*source,* etc), a source precedence relation and a target precedence relation. A subscription is defined from a catalogue by a subset of source FBT (also referred to as a source set), a subset of target FBT (also referred to as a target set), a strict total ordering of the source set (also referred to as a source sequence) and a strict total ordering of the target set (also referred to as a target sequence) such that every reversible FBT belongs to the source set if and only if it belongs to the target set. In order to ensure an orderly and "interaction-free" routing, DFC imposes the following consistency rules on subscriptions:

Rule 1.　The source (resp., target) sequence contains the source (resp., target) precedence relation induced by the source (resp., target) set.

Rule 2.　The ordering of the reversible FBT in the source sequence is the inverse of their ordering in the target sequence.

It follows from Rule 2 that the source and target sequences of a consistent subscription are interdependent. In order to make their computation independent, DFC imposes the following rules on catalogues:

Rule 3.　The source and target precedence relations are transitive.

Rule 4.　The restrictions of the source and target precedence relations to the set of reversible FBT are strict total orders.

Rule 5.　The restrictions of the source and target precedence relations to the set of reversible FBT are inverse relations.

Any set of FBT selected from a catalogue satisfying Rule 3 can be turned into a subscription that satisfies Rule 1 (Rule 3 implies that the precedence relations are strict partial orders and therefore directed acyclic graphs (DAGs)). On the other hand, any set of FBT determines a source set and a target set verifying that every reversible FBT belongs to the source set if and only if it belongs to the target set. Therefore, the subgraph of the source (respectively, target) precedence graph induced by the source (resp., target) set is a DAG and, since any DAG can be extended into a total order, the result follows.

A topological sort algorithm can be used to compute such a subscription in a time that is linear with the size of the precedence relations. Rule 4 implies that the ordering of the reversible FBT in the source and target sequences is the same for all consistent subscriptions, that is, subscribers have no choice over these orderings. Besides, as a consequence of Rule 5 and Rule 4, Rule 2 is necessarily satisfied by any subscription satisfying Rule 1. Therefore, the three rules on catalogues guarantee that any set of FBT can be turned into a consistent subscription in linear time.

Although they facilitate the computation of consistent subscriptions, the DFC rules on catalogues are overly restrictive. On the one hand, Rule 3 prohibits cycles in precedence relations and, in particular, prohibits the inclusion of mutually incompatible FBT in catalogues, i.e., FBT such as call-waiting and call-forwarding-on-busy which form a precedence cycle. As a result, service providers will have to arbitrarily discard FBT from their catalogues to break cycles, e.g., rejecting call-waiting in favour of call-forwarding-on-busy.

Rule 3 also assumes that precedence relations are closed by transitivity although the precedence constraints uncovered by designers may not originally form a transitive relation. If so, making the relations transitive will create precedence constraints that do not correspond to any real interactions. Likewise, Rule 4 may force designers/providers to add arbitrary precedence constraints to the original source and target precedence relations in order to make them total in the reversible region. All these constraints will effectively label some of the safe subscriptions as inconsistent and will prevent their selection at subscription configuration time.

The three rules on catalogues can actually be dropped as long as a subscription configuration system enforces the two consistency rules on subscriptions. This approach brings more flexibility to service providers when creating FBT catalogues since source and target precedence relations need not be transitive or acyclic, nor total or inverse in the reversible region. In particular, mutually exclusive FBT can be tolerated in the same catalogue. In addition, the approach provides subscribers with a wider range of choices since fewer subscriptions will be tagged inconsistent.

At the same time, allowing cyclic precedence relations means that some FBT sets may not be convertible into consistent subscriptions as they may have no source and target orderings satisfying both Rule 1 and Rule 2. More generally, it may not be possible to convert partially ordered sets of FBT into consistent subscriptions. Concretely, this means that a subscriber submitting a set of FBT together with sequencing constraints to a subscription configuration system may see his request rejected as there may be no way of inferring a consistent subscription. Therefore, a subscription configuration system allowing subscribers to arbitrarily select and sequence features must be capable of detecting and managing inconsistent requirements, e.g., by suggesting consistent alternatives.

According to a first aspect of the present invention, there is provided a method of configuring a feature subscription, the method comprising the steps of: a) retrieving a feature subscription, the feature subscription comprising one or more features; b) configuring the feature subscription; c) determining one or more consistent solutions of the feature subscription configured in step b); and d) selecting a consistent solution from the one or more consistent solutions determined in step c).

The consistent selection selected in step d) may be used to determine the routing of a communication session. The method may also comprise the further step of: e) retrieving a feature catalogue; wherein step e) is performed after step a) and before step b).

In one embodiment of the present invention, step b) comprises the steps of i) deleting one or more features from the feature subscription; and/or ii) adding one or more features from the feature catalogue to the feature subscription.

In an alternative embodiment of the present invention, step b) comprises the step of modifying a feature present in the feature subscription.

According to a second aspect of the present invention, there is provided a computer program product comprising computer executable code for performing one of the methods as described above.

According to a third aspect of the present invention, there is provided a service configuration system comprising: a user interface, a configuration engine, a catalogue data store and a subscription data store, wherein, in use, a feature subscription comprising one or more features is retrieved from the subscription data store; the retrieved feature subscription is configured; one or more consistent solutions of the configured feature subscription are determined; and one of the one or more consistent solutions is selected.

Embodiments of the present invention will now be described, by way of example only, with reference to the accompanying drawings in which:

Figure 1 shows a schematic depiction of a SIP architecture in which a multimedia session is established between a first terminal and a second terminal;

Figure 2 shows a schematic depiction of a call being routed between a first terminal and a second terminal;

Figure 3 shows a schematic depiction of a subscription configuration system according to the present invention;

Figure 4 shows a flowchart which describes the operation of a method according to the present invention;

Figure 5 shows a schematic depiction of a source precedence relationship for the feature set shown in Table 1;

Figure 6 shows a schematic depiction of a target precedence relation for the feature set shown in Table 1;
Figure 7 shows a schematic depiction of a subscription for the catalogue C;
Figure 8 shows a schematic depiction of a partially ordered subscription;
Figure 9 shows a schematic depiction of a subscription that is totally ordered;
Figure 10 shows a schematic depiction of three subscriptions S1, S2 & S3 that illustrates extension relationships between the;
Figure 11 shows a schematic depiction of an inconsistent subscription;
Figure 12 shows a schematic depiction of a configuration session;
Figure 13 shows a schematic depiction of a state diagram which represents the user interface;
Figure 14 shows a schematic depiction of a labelled subscription which corresponds to the final state of the session shown in Figure 12;
Figure 15 shows a schematic depiction of the matrices used in the conversion process; and
Figure 16 shows a schematic depiction of the matrices in the conversion process.

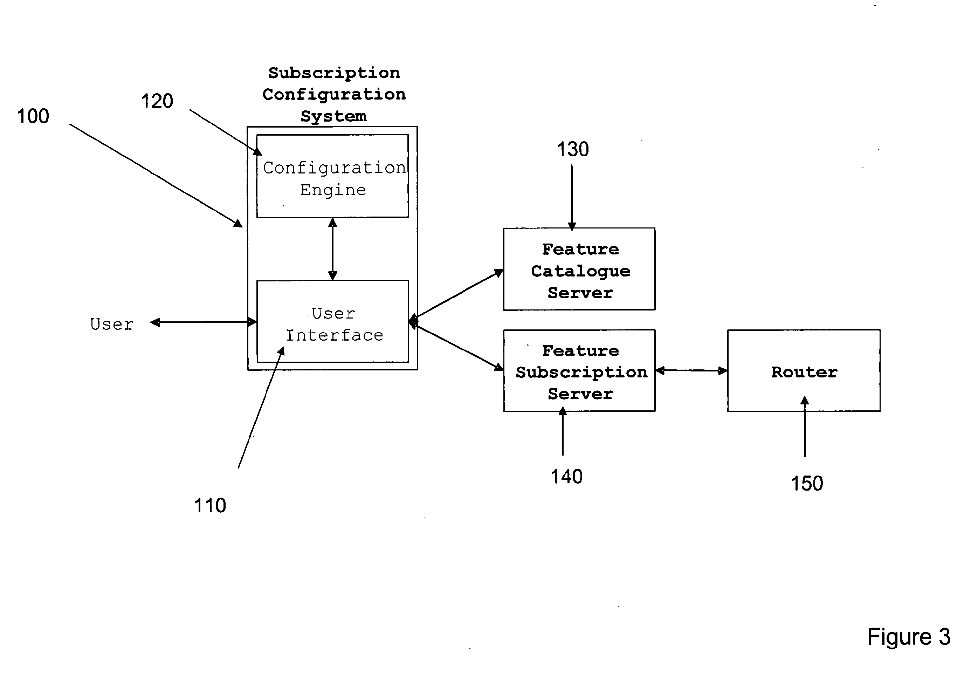

Figure 3 shows a schematic depiction of a subscription configuration system according to the present invention. The subscription configuration system (SCS) 100 comprises a user interface 110 which is in communication with a constraint-based configuration engine (CE) 120. In use, a user will interact with the user interface 110 and the UI will interface with the CE and two external systems, a Feature Subscription Server (FSS) 140 and a Feature Catalogue Server (FCS) 130. The FSS stores addresses, subscriptions, subscriber accounts (i.e., identities and profiles), the surjective function mapping subscribers to addresses and the bijection mapping addresses to subscriptions. The UI relies on the FSS to authenticate SCS users, to grant or deny them the right to configure subscriptions and to make subscriptions available on demand. The FCS stores the feature catalogue published by the service provider and makes it available to the UI on demand. It will be understood that the FSS and FCS may be implemented in a variety of ways and that the exact choice is not germane to the present invention.

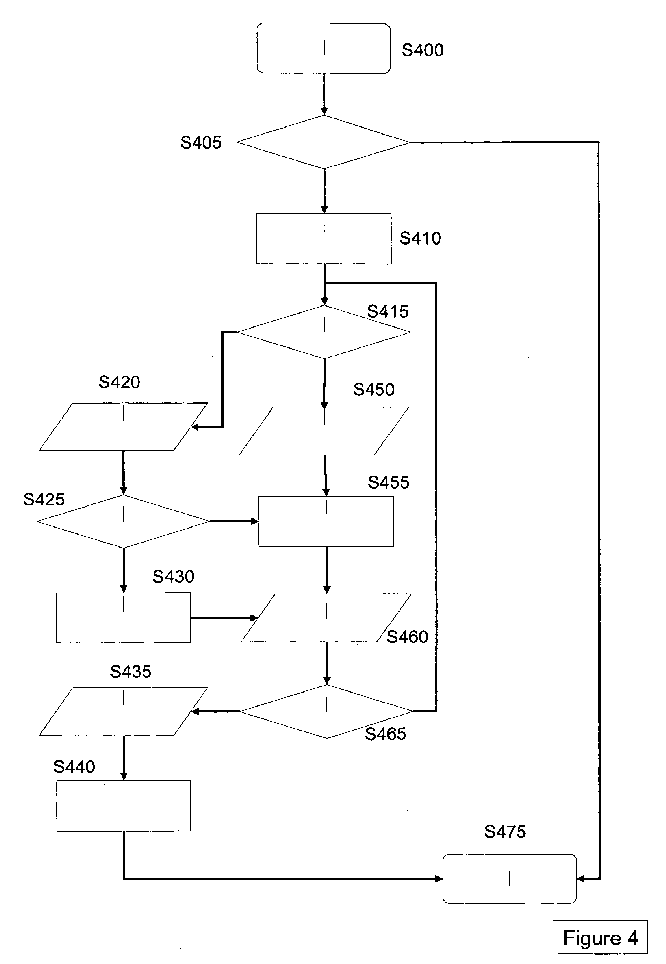

Figure 4 shows a flowchart which describes the operation of a method according to the present invention. The method begins at S400 and then at S405 a user provides an identifier and authentication data to the UI. The UI passes this information onto the FSS which determines whether the user is allowed to use the system. If not, then the process is terminated at S475. If the user is allowed to use the system then the FSS returns a suitable acknowledgement to the UI. At S410 the UI retrieves the subscription of the address from the FSS and the feature catalogue from the FCS. At S415 the user may then use the UI to select between a batch configuration mode or an incremental configuration mode (which may be configured to be the default setting).

If the user chooses to select the batch configuration mode then at S420 the user requests the modification of a subscription and at S425 the CE then determines the consistency of the resulting subscription (see below). If the subscription is consistent, it returns its partially ordered consistent (POC) closure and a set of totally ordered consistent (TOC) extensions (S455). If the subscription is inconsistent, it returns a set of POC contractions also known as relaxations (S430). Regardless of the determination made at S425, the user has to select one of the consistent subscriptions (S460) before proceeding. The user may then choose to repeat the process, by returning to S415, or to terminate the session if he is satisfied with the current subscription and if the subscription is totally ordered (S465).

If the user selects the incremental configuration mode at S415 then the user may only make atomic modifications at each iteration, for example adding a single feature or precedence constraint to the subscription or retracting a single feature or precedence constraint from the subscription. Although less flexible than the batch configuration mode, the incremental configuration mode guarantees the consistency of the subscription throughout a session, that is, any incremental modification necessarily results in a consistent subscription. Therefore, the CE never faces the task of detecting inconsistency and computing relaxations in incremental mode and the user is never confronted with the task of selecting relaxations. At S455, the partially ordered consistent (POC) closure and a set of totally ordered consistent (TOC) extensions (S455) are computed prior to the selection of a consistent subscription (S460). The user may then choose to repeat the process, by returning to S415, or to terminate the session if he is satisfied with the current subscription and if the subscription is totally ordered (S465). If at S465, the user chooses to re-configure a subscription then there is the option of switching to the other configuration mode before requesting new modifications to the current subscription.

However, if the user chooses to terminate the session (S465), at S435 the user provides the required operational data for the subscribed features. The subscription is then saved in the FSS (S440) and will serve as the initial configuration for the next configuration session. Until it is changed, the subscription will be used by routers when setting up usages involving the address as an originating party or as a terminating party.

The data objects that are manipulated and exchanged between the user, the UI and the CE will now be described in greater detail.

A feature is an object with a list of data types and two boolean attributes named *source* and *target* such that one of them at least is true. Features that are both source and target will be referred to as reversible.

A feature catalogue is defined by a set F of features, an irreflexive binary relation defined over the set of source features in F (known as source precedence relation) and an irreflexive binary relation defined over the set of target features in F (known as target precedence relation). As discussed above, it is not required that the source and precedence relations be acyclic or transitive, nor total or inverse over the set of reversible features (Rule 3, Rule 4 and Rule 5).

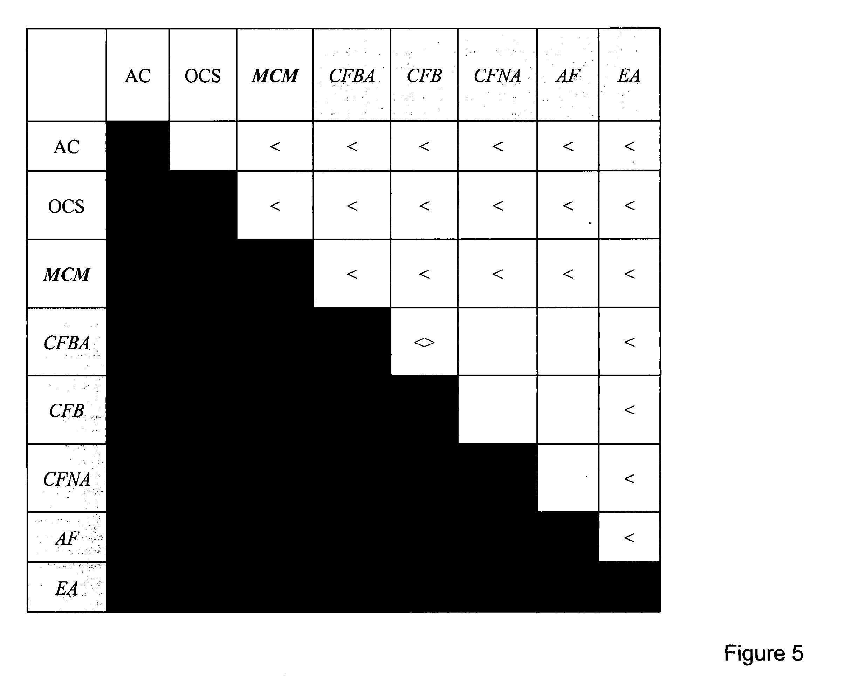

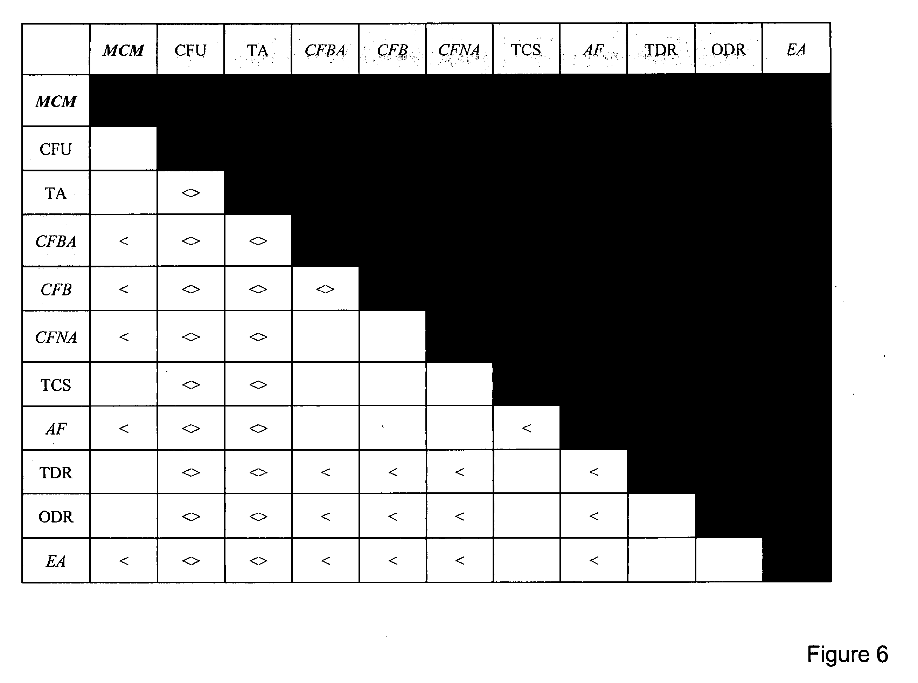

Table 1 below shows an example of a feature set. For Table 1 and Figures 5 & 6, a plain background means that the feature is source, a shaded background means that the feature is target and an italic text means that the feature is reversible.

Table 1: Exemplary feature set

| FEATURE | AC | OCS | *MCM* | CFU | TA | *CFBA* | *CFB* | *CFNA* | TCS | *AF* | TDR | ODR | *EA* |
|---|---|---|---|---|---|---|---|---|---|---|---|---|---|
| source | 1 | 1 | 1 | 0 | 0 | 1 | 1 | 1 | 0 | 1 | 0 | 0 | 1 |
| target | 0 | 0 | 1 | 1 | 1 | 1 | 1 | 1 | 1 | 1 | 1 | 1 | 1 |

It can be seen from Table 1 that originating-call-screening (OCS) is a non-reversible source feature, terminating-call-screening (TCS) is a non-reversible target feature and mid-call-move (MCM) is a reversible feature.

Figure 5 shows a schematic depiction of a source precedence relationship for the feature set shown above in Table 1. For each cell (x,y), label '<' means feature x precedes feature y, '>' means y precedes x, '<>' means x precedes y and y precedes x (ie, x and y are mutually exclusive) and label ' ' means there exists no precedence constraint between x and y. It can be seen from Figure 5 that, for example, originating-call-screening (OCS) precedes mid-call-move (MCM).

Figure 6 shows a schematic depiction of a target precedence relation for the feature set shown above in Table 1. Similarly, for each cell (x,y), label '<' means feature x precedes feature y, '>' means y precedes x and '<>' means x precedes y and y precedes x. It can be seen, for example, that call-forwarding-on-busy (CFB) precedes mid-call-move (MCM) but is incompatible with call-forwarding-unconditional (CFU), i.e. that they precede each other. The feature set of Table 1 and the precedence relationship given in Figures 5 & 6 define a catalogue which will subsequently be referred to as C.

A feature subscription is defined from a catalogue by a subset F of its features, a binary relation defined over the set of source features in F, a binary relation defined over the set of target features in F and values for the list of data types of each feature in F.

The source set is defined as the set of source features in the subscription, the source order the binary relation defined over the source set and the source graph the directed graph <source set, source order>. Similarly, the target set is defined as the set of target features in the subscription, the target order the binary relation defined over the target set and the target graph the directed graph <target set, target order>. Furthermore, the reversible set is defined as the set of reversible features in the subscription.

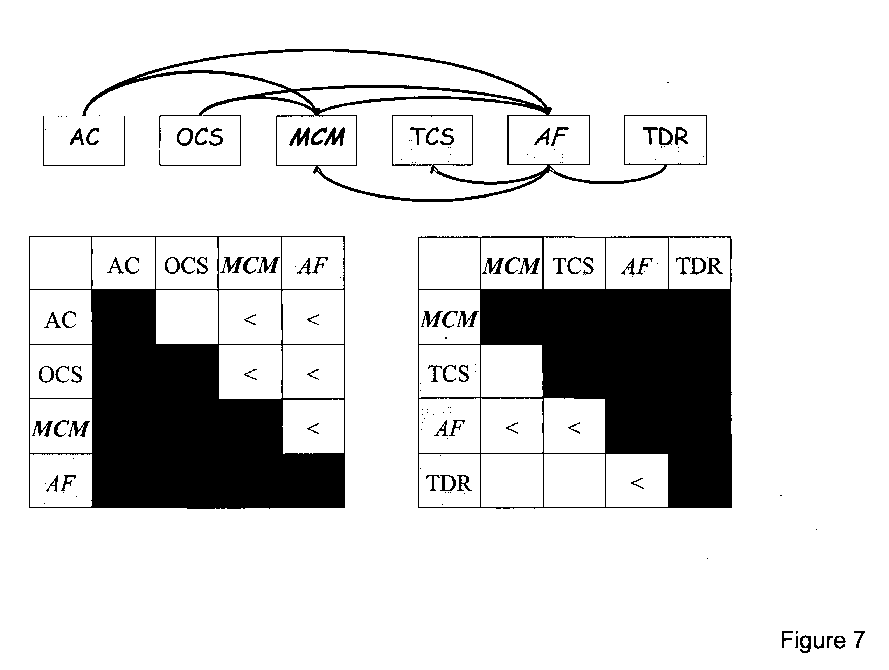

Figure 7 shows a schematic depiction of a subscription for the catalogue C. The top part of the Figure represents the source graph (nodes AC, OCS & MCM) and the target graph (nodes TCS, AF & TDR). The arrowed lines above the nodes are related to the source graph and the arrowed lines below the nodes are related to the target graph.

A subscription is partially ordered if and only if its source and target orders are strict partial orders. A strict partial order is an irreflexive and transitive binary relation and therefore a directed acyclic graph The subscription shown in Figure 7 is not partially ordered since its target order is not transitive, e.g., the arc <TDR,TCS> is missing.

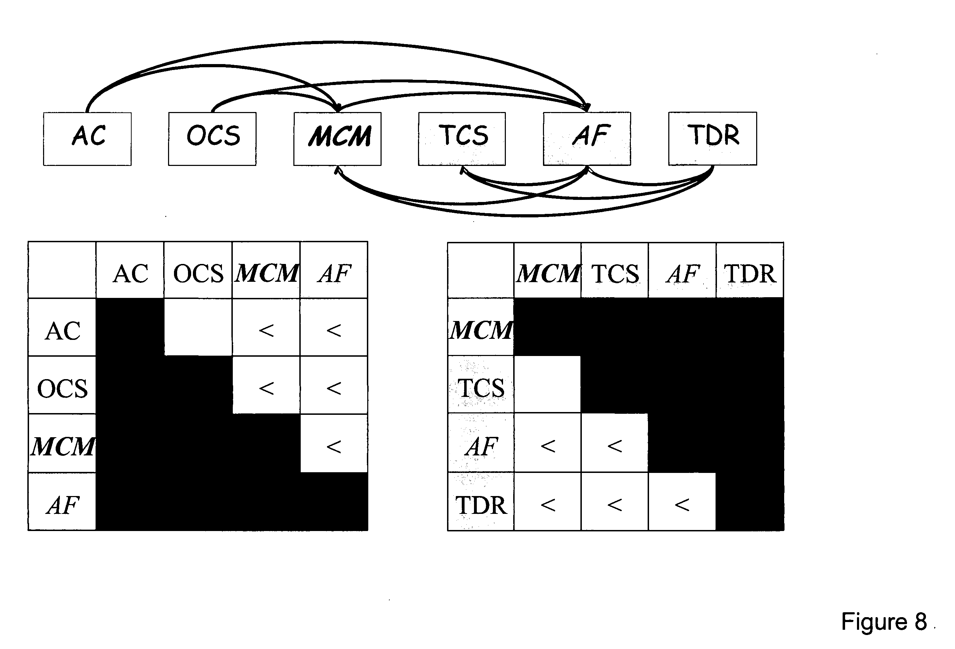

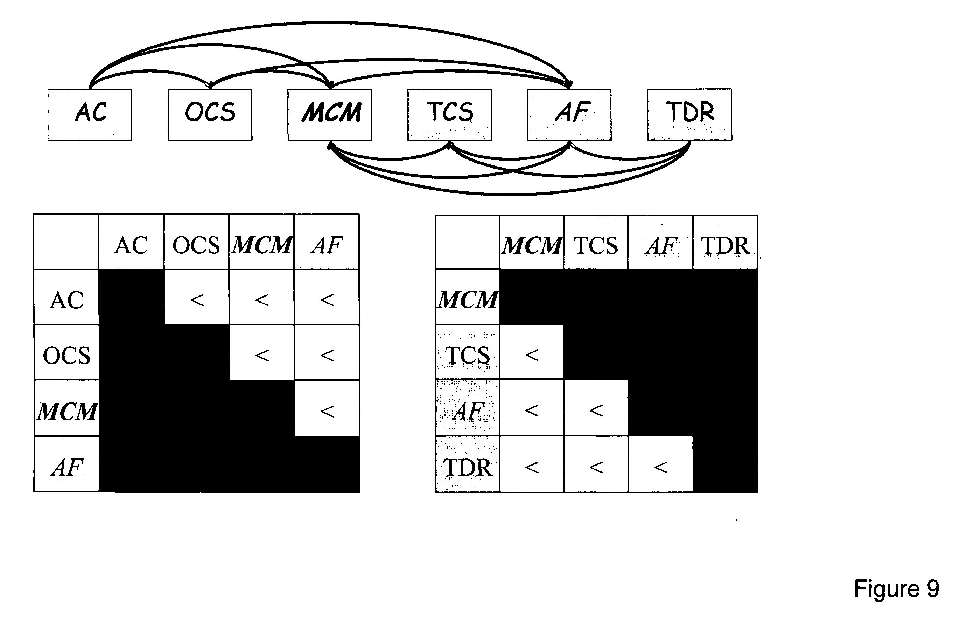

Figure 8 shows a schematic depiction of a partially ordered subscription. A partially ordered subscription is totally ordered if and only if its source and target orders are strict total orders (i.e. a strict total order R over a set S is a strict partial order that is total, i.e., for any pair of distinct elements x and y of S, xRy or yRx). The subscription shown in Figure 8 is not totally ordered as neither its source order nor its target order is total, e.g., AC and OCS are incomparable and so are MCM and TCS. Figure 9 shows a schematic depiction of a subscription that is totally ordered.

It is possible to use graph-theoretic definitions to define the notions of extension, contraction and consistency of subscriptions such that:

• A subgraph of a directed graph H is a directed graph whose node and arc sets are subsets of those of H.
• A subgraph of a directed graph H is a spanning subgraph of H if it has the same node set as H.
• A subgraph G of a directed graph H is said to be induced if, for any pair of nodes x and y of G, xy is an arc of G if and only if xy is an arc of H. If the node set of G is a subset S of the node set of H, then G is said to be induced by S.

The above notions are not strict, i.e., every directed graph is a subgraph of itself.

• A subscription T extends a subscription S if and only if the source and target graphs of S are subgraphs of, respectively, the source and target graphs of T.
• A subscription T arc-extends a subscription S if and only if the source and target graphs of S are spanning subgraphs of, respectively, the source and target graphs of T.

- A subscription S contracts a subscription T if and only if T extends S.
- A subscription S arc-contracts a subscription T if and only if T arc-extends S.

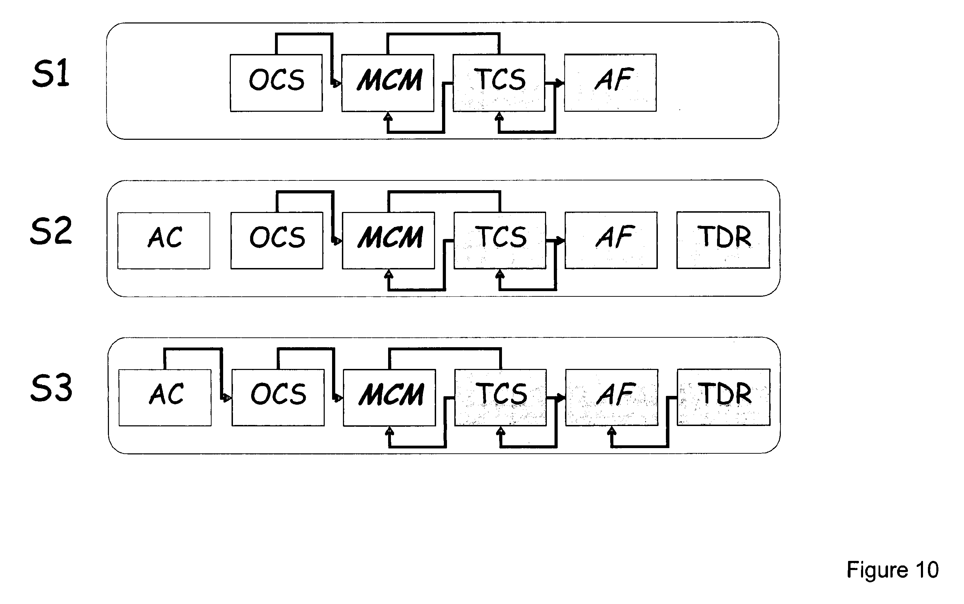

Figure 10 shows a schematic depiction of three subscriptions S1, S2 & S3 that illustrates extension relationships between the subscriptions in which S2 extends S1 and S3 arc-extends S2.

A subscription is *consistent* with a catalogue if and only if can be arc-extended into a totally ordered subscription verifying the following rules:

Rule 6. The source (respectively, target) graph arc-extends the subgraph of the source (resp., target) precedence graph induced by the source (resp., target) set.

Rule 7. The ordering of the reversible features in the source order is the inverse of their ordering in the target order.

It follows from Rule 6 that a subscription cannot be consistent if either the subgraph of the source precedence graph induced by the source set or the subgraph of the target precedence graph induced by the target set is cyclic. Note that operational parameters play no role in determining the consistency of subscriptions.

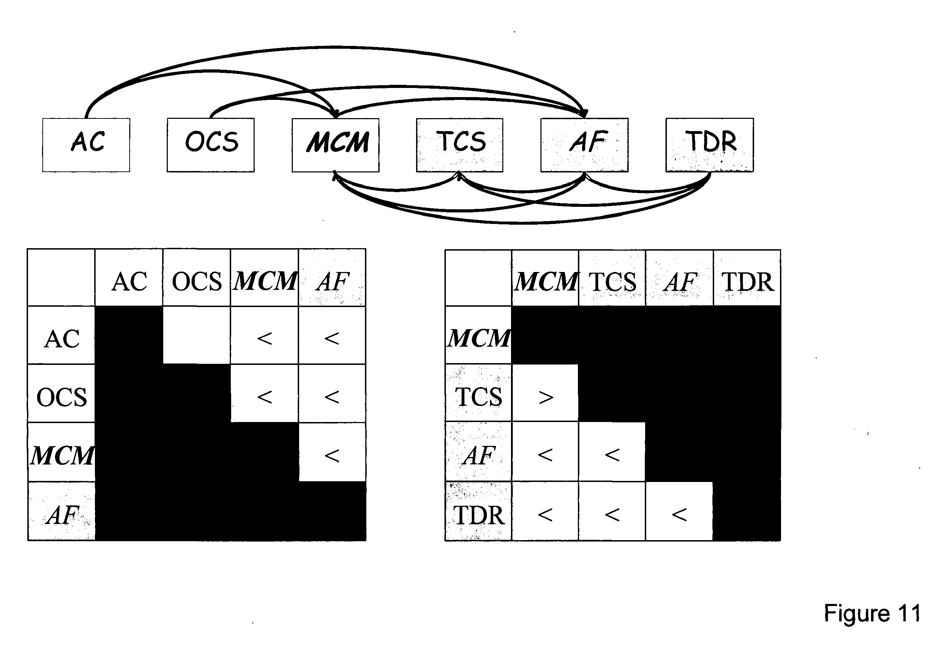

The subscription shown in Figure 9 is totally ordered and verifies Rule 6 and Rule 7 therefore it is consistent with the catalogue C. It also arc-extends the subscription shown in Figure 8 which arc-extends itself the subscription shown in Figure 7 so the latter are both consistent. On the other hand, the subscription shown in Figure 11 is inconsistent since its target graph is cyclic due to the arc (MCM,TCS).

The following subscription properties hold:

- Inconsistency is preserved by extension.
- Every consistent subscription has one or more totally ordered consistent (TOC) arc-extensions.
- Every consistent subscription has a unique partially ordered consistent (POC) arc-extension which contracts each of its POC extensions. This extension is referred to as the consistent closure of the subscription.
- Every inconsistent subscription has one or more contractions that are POC. Such contractions are referred to as relaxations.

For instance, the subscription shown in Figure 8 is the consistent closure of the consistent subscription shown in Figure 7. The subscription shown in Figure 9 is one of its TOC arc-extensions. It is possible to add the feature ODR and appropriate arcs to obtain another TOC subscription.

For every consistent subscription X, there can be associated a triple (N,As,At) which is defined as follows:

- N is the set of features that are not part of any of the TOC extensions of X,
- As is the complement of the set union of the source orders of the TOC arc-extensions of X.
- At is the complement of the set union of the target orders of the TOC arc-extensions of X.

Such triples are referred to as anti-subscriptions. Note that anti-subscriptions do not correspond to directed graphs like subscriptions since some of the features connected in As or At may not belong to N.

Any DFC catalogue of feature box types (FBT) can be transformed into a catalogue of features as follows. Any FBT that is source and target but not reversible is converted into two features. Both features get the data types of the FBT and one is source but not target while the other is target but not source. Any other FBT is converted into a single feature which gets the data types and source and target values of the FBT. Any precedence constraint between two source FBTs is then converted into a precedence constraint between the corresponding source features (which exist and are uniquely defined by definition of the mapping between FBT and features). Similarly, any precedence constraint between two target FBTs is converted into a precedence constraint between the corresponding target features (which exist and are uniquely defined by definition of the mapping between FBT and features).

Any feature set obtained and structured through this transformation forms a feature catalogue. This transformation also ensures the equivalence between the notion of consistent DFC subscription and TOC feature subscription. Specifically, it determines a one-to-one mapping between the set of DFC subscriptions consistent with a DFC catalogue and the set of totally ordered subscriptions consistent with the associated feature catalogue.

The UI and CE of the SCS are independent modules which co-operate to service the requests of users. During a configuration session, a user interacts with the UI and the UI uses the CE as a black-box to handle configuration requests. The CE provides a unique method to serve all configuration requests submitted by the UI. It is transaction stateless, that is, it maintains no state information relating to previous transactions with the UI. This means that the state of a session has to be encapsulated in each request submitted by the UI to the CE.

The following discussion provides a state-based specification of the UI and a specification of the interface and behaviour of the CE during configuration sessions. It does not model the final operations following the user's decision to exit, e.g., the instantiation of the operational parameters of the subscribed features, the saving of the resulting subscription in the FSS. The reason is these operations play no role as such in the computation of subscriptions and do not involve the CE.

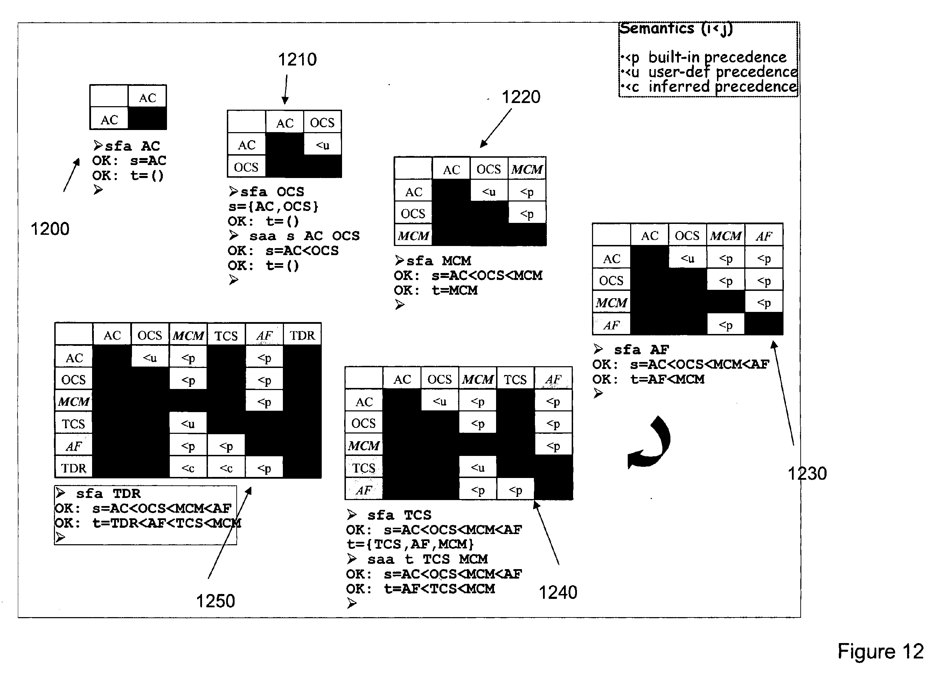

A subscription configuration session may be viewed as a traversal of a subscription space associated to a feature catalogue. A session starts from a TOC subscription and through a series of transitions leads to another TOC subscription. Figure 12 shows a schematic depiction of a configuration session. A single matrix is used to represent each state of the configuration, with the part of the matrix above the diagonal representing the source subscription and the part of the matrix below the diagonal representing the target subscription. The process begins with matrix 1200 and then progresses in a clockwise direction via matrices 1210, 1220, 1230 & 1240 before the process ends with matrix 1250. Precedence constraints are labelled based on whether they are predefined in the catalogue (label 'p'), stated by the user (label 'u') or inferred by the CE (label 'c'). It will be noticed that the final matrix 1250 corresponds to the subscription shown in Figure 9.

There are two types of user inputs made in this particular session. The first consists of adding a single feature to the subscription and is denoted by the command 'sfa'. For instance, '> sfa AC' adds the feature AC to the initial and empty subscription (not shown here) and the result is the first matrix 1200. The second consists of sequencing two features in a region and is denoted by the command 'saa'. For instance, '> saa s AC OCS' adds the arc (AC,OCS) to the source subscription and the result is the matrix 1220.

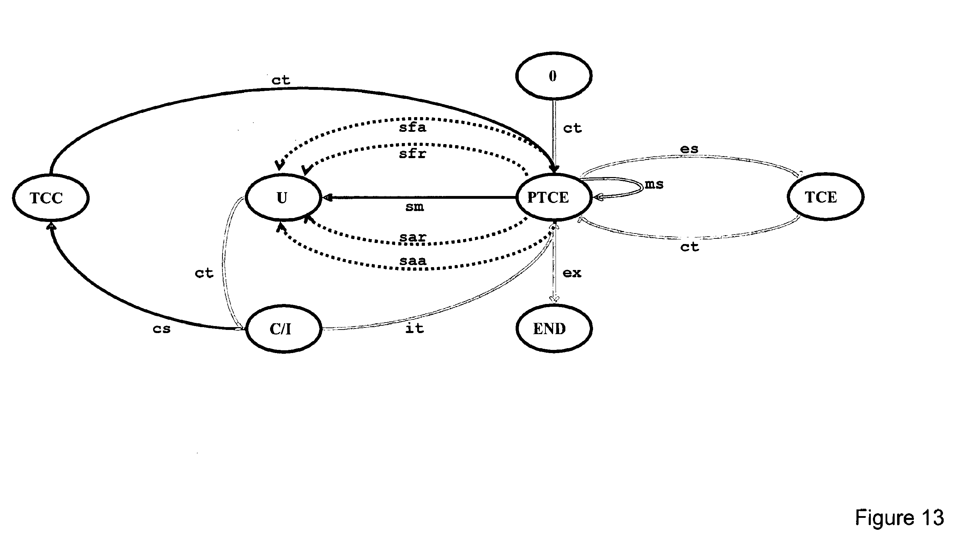

Figure 13 shows a schematic depiction of a state diagram which represents the user interface, which can be specified as a finite-state machine. State transitions are either user inputs, CE transactions or internal transitions. A user input is a transition triggered by an input from the user. A CE transaction is a request/response exchange between the UI and the CE which starts with the UI sending a configuration request and terminates with the UI receiving the response from the CE. An internal transition is a transition taken by the UI without external trigger. Most transitions have triggering pre-conditions. The states are labelled as follows:

- 0 denotes the "initial" state, i.e., the state reached by the UI when the initial subscription has been loaded and the UI awaits for the first input from the user.
- END denotes the "final" state, i.e., the state reached when the user has decided to exit.
- U denotes an intermediate state where the consistency of the subscription is unknown to the UI.
- C/I denotes an intermediate state where the consistency or inconsistency of the subscription is known to the UI.
- PTCE denotes an intermediate state where the subscription is consistent and partially ordered but not necessarily totally ordered.
- TCE denotes an intermediate state where the subscription is TOC and is one of the arc-extensions of the previous (consistent) subscription that has been selected by the user.
- TCC denotes an intermediate state where the subscription is POC and is one of the contractions of the previous (inconsistent) subscription that has been selected by the user.

The state transitions are the following:

- ms (mode selection) indicates the setting of the configuration mode.
- sfa (single feature addition) indicates the addition of a feature to the subscription. The feature must not be part of the subscription or its anti-subscription.
- sfr (single feature retraction) indicates the retraction of a feature from the subscription. The feature must be part of the subscription.
- saa (single arc addition) indicates the addition of a precedence constraint to the source order or to the target order of the subscription. The connected features must be part of the subscription but the constraint must not be part of the subscription or the anti-subscription.
- sar (single arc retraction) indicates the retraction of a precedence constraint from the source order or the target order of the subscription. The constraint must be part of the subscription and must have been originally created by the user.
- sm (subscription modification) indicates the addition of features and/or precedence constraints to, and/or the removal of features and/or precedence constraints from, the current subscription.
- es (extension selection) indicates the selection of a TOC arc-extension of the current subscription.
- cs (contraction selection) indicates the selection of a TOC contraction of the current subscription.
- ct (CE transaction) indicates a request/response transaction with the CE.
- it (internal transition) indicates an internal transition.
- ex (exit) indicates the termination of the session.

Based on this model, the trace corresponding to the configuration session described above with reference to Figure 12 is given by:

$$0 \rightarrow ct \rightarrow PTCE \rightarrow sfa<AC>$$
$$\rightarrow U \rightarrow ct \rightarrow C/I \rightarrow it \rightarrow PTCE \rightarrow sfa<OCS>$$
$$\rightarrow U \rightarrow ct \rightarrow C/I \rightarrow it \rightarrow PTCE \rightarrow saa<s,AC,OCS>$$
$$\rightarrow U \rightarrow ct \rightarrow C/I \rightarrow it \rightarrow PTCE \rightarrow sfa<MCM>$$
$$\rightarrow U \rightarrow ct \rightarrow C/I \rightarrow it \rightarrow PTCE \rightarrow sfa<AF>$$
$$\rightarrow U \rightarrow ct \rightarrow C/I \rightarrow it \rightarrow PTCE \rightarrow sfa<TCS>$$
$$\rightarrow U \rightarrow ct \rightarrow C/I \rightarrow it \rightarrow PTCE \rightarrow saa<t,TCS,MCM>$$
$$\rightarrow U \rightarrow ct \rightarrow C/I \rightarrow it \rightarrow PTCE \rightarrow sfa<TDR>$$
$$\rightarrow U \rightarrow ct \rightarrow C/I \rightarrow it \rightarrow PTCE \rightarrow ex \rightarrow END.$$

Each state is defined as a list of data comprising

- the catalogue,
- the configuration mode,
- a labelled subscription,
- boolean flags indicating whether the subscription is known by the UI to be consistent or not, POC or not, and TOC or not,
- the anti-subscription of the subscription which lists any feature and precedence constraint that would make the subscription inconsistent if added to it,
- a list of TOC arc-extensions of the subscription that the user may select when the subscription is consistent,
- a list of POC contractions of the subscription that the user may select when the subscription is inconsistent.

Since subscriptions are configured iteratively, it is convenient for the user to be able to revise past decisions during a session, e.g., to retract arcs or features previously added. More importantly, the CE which is transaction stateless must be able to differentiate between factual information (i.e., catalogue precedence constraints), user decisions (i.e., user-defined precedence constraints) and inferred information (i.e., CE-inferred precedence constraints) when it has to compute relaxations. This information is recorded in each state by labelling the arcs of the source and target subscription graphs using the following convention: label 'p' for predefined arcs, label 'u' for user-defined arcs and label 'c' for the arcs generated by the CE.

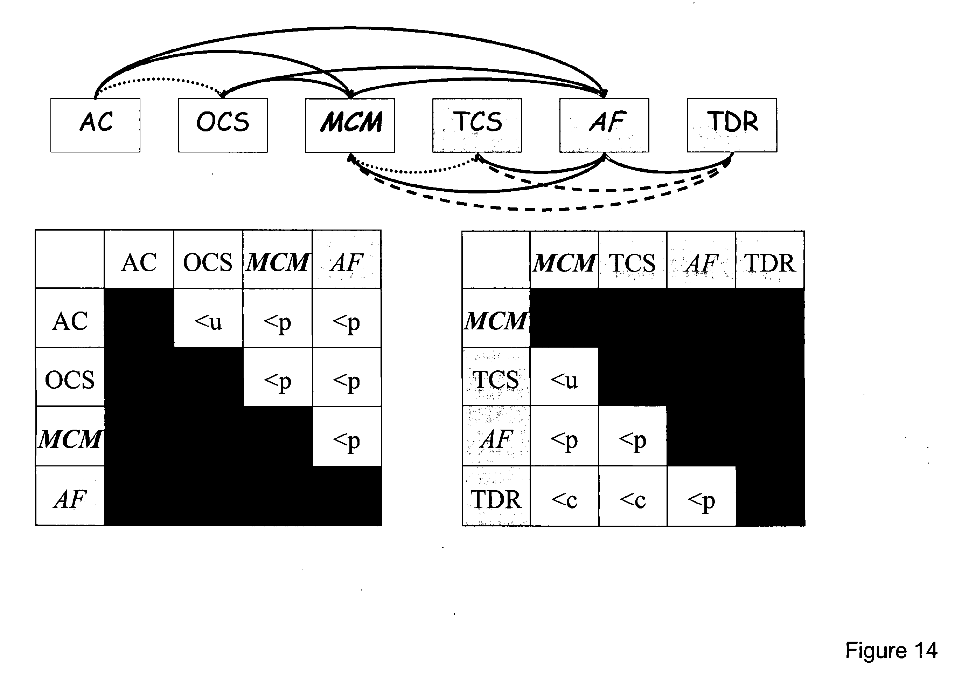

Figure 14 shows a schematic depiction of a labelled subscription which corresponds to the final state of the session shown in Figure 12 (i.e. matrix 1250). In Figure 14, predefined constraints are represented by continuous arcs (for example between AC & MCM), user-defined constraints are represented by round-dotted arcs (for example between AC & OCS) and constraints generated by the CE are represented by dashed arcs (for example, between MCM & TDR).

A session state can be formalised using the following list of variables:

- m - the configuration mode,
- c - the catalogue,
- s - the current subscription labelled over {'p','u','c'},
- a - the anti-subscription of s or the undefined value *,
- es - a set of TOC extensions of s or the undefined value *,
- cs - a set of POC contractions of s or the undefined value *,
- cf - a boolean value indicating whether s is consistent or not, or the undefined value *,
- pf - a boolean value indicating whether s is POC or not, or the undefined value *,
- tf - a boolean value indicating whether s is TOC or not, or the undefined value *

Table 2 below provides the definition of the initial state which corresponds to the subscription S stored in the subscriber profile. This subscription is either the empty subscription or a subscription generated from a configuration session. In either case, it is TOC. Furthermore, its anti-subscription and list of possible extensions are not stored in the profile and need to be recomputed, hence the setting of the fields.

Table 2. Definition of the initial state.

|  | Initial state s[0] |
| --- | --- |
| - C is the feature catalogue | - m[0] = incremental |

(continued)

|  | Initial state s[0] |
|---|---|
| retrieved from the FCS<br>- S is the labelled subscription retrieved from the FSS. S is totally ordered and consistent with C. | - c[0] = C<br>- s[0] = S<br>- a[0] = *<br>- es[0] = *<br>- cs[0] = *<br>- cf[0] = 1<br>- pf[0] = 1<br>- tf[0] = 1 |

Table 3 provides the semantics of the various transition types by the means of pre- and post-conditions on state variables. The specification relies on the following methods:

- s' addF (c, s, f) adds the feature f to the labelled subscription s, adds each precedence constraint from the catalogue c that connects f to another feature in s and labels it with 'p', removes any precedence constraint labelled with 'c' and returns the resulting subscription s'.
- s' addP (c, s, p) adds the source or target precedence constraint p to the labelled subscription s with label 'u', removes any precedence constraint labelled with 'c' and returns the resulting subscription s'.
- s' subF (s, f) removes the feature f from the labelled subscription s, removes any precedence constraint connecting f to other features in s, removes any precedence constraint labelled with 'c' and returns the resulting subscription s'.
- s' subP (s, p) removes the source or target precedence constraint p from the labelled subscription s, removes any precedence constraint labelled with 'c' and returns the resulting subscription s'.
- s' label (c, s) labels any precedence constraint of s that is not in c with 'u' and any other constraint with 'p' and returns the resulting subscription s'.
- <cf',pf,tf,s',a',es,cs> solve(c,cf,s,a,n,t) handles the configuration requests submitted by the UI to the CE. The list of input parameters represents a request submitted by the UI and the list of output parameters the response returned by the CE. The request includes a catalogue c, a consistency flag cf, a labelled subscription s, an anti-subscription a, some positive integer n>0 representing the maximum number of extensions or relaxations requested, and some positive number t representing a duration. The response includes a consistency flag cf', a partial ordering flag pf, a total ordering flag tf, a labelled subscription s', an anti-subscription a', a set of subscription extensions es and a set of subscription contractions cs.

Table 3. Semantics of transitions between state k and state k+1. The catalogue field 'c' is omitted since it is remains constant across states.

| Transition type | State k | State k+1 |
|---|---|---|
| Mode selection | User input: | - m[k+1] = m |
|  | - mode:m | - s[k+1] = s[k]<br>- a[k+1] = a[k]<br>- es[k+1] = es[k]<br>- cs[k+1] = cs[k]<br>- cf[k+1] = cf[k]<br>- pf[k+1] = pf[k]<br>- tf[k+1] = tf[k] |
| Single feature addition | User input:<br>- feature: f<br><br>Pre-conditions:<br>- m[k] = incremental<br>- f is not in s[k]<br>- f is not in a[k] | - m[k+1] = m[k]<br>- s[k+1] = addF(c[k],s[k],f)<br>- a[k+1] = *<br>- es[k+1] = *<br>- cs[k+1] = *<br>- cf[k+1] = 1<br>- pf[k+1] = * |

(continued)

| Transition type | State k | State k+1 |
|---|---|---|
| | | - tf[k+1] = * |
| Single feature retraction | User input:<br>- feature: f<br><br>Pre-conditions:<br>- m[k] = incremental<br>- f is in s[k] | - m[k+1] = m[k]<br>- s[k+1] = subF(s[k],f)<br>- a[k+1] = *<br>- es[k+1] = *<br>- cs[k+1] = *<br>- cf[k+1] = 1<br>- pf[k+1] = *<br>- tf[k+1] = * |
| Single arc addition | User input:<br>- constraint p: x<y in region r<br><br>Pre-conditions:<br>- m[k] = incremental<br>- x and y are in s[k] and region r<br>- p is not in s[k]<br>- p is not in a[k]<br>- p is not in c[k] | - m[k+1] = m[k]<br>- s[k+1] = addP(c[k],s[k],p)<br>- a[k+1] = *<br>- es[k+1] = *<br>- cs[k+1] = *<br>- cf[k+1] = 1<br>- pf[k+1] = *<br>- tf[k+1] = * |
| Single arc retraction | User input:<br>- constraint p: x<y in region r<br><br>Pre-conditions:<br>- m[k] = incremental<br>- p is in s[k]<br>- label of p in s[k] is 'u' | - m[k+1] = m[k]<br>- s[k+1] = subP(s[k],p)<br>- a[k+1] = *<br>- es[k+1] = *<br>- cs[k+1] = *<br>- cf[k+1] = 1<br>- pf[k+1] = *<br>- tf[k+1] = * |
| Subscription modification | User input:<br>- subscription s obtained by freely -<br>modifying s[k] and such that s -<br>verifies Rule 6<br><br>Pre-conditions:<br>- m[k] = batch | - m[k+1] = m[k]<br>- s[k+1] = label(c[k],s)<br>- a[k+1] = *<br>- es[k+1] = *<br>- cs[k+1] = *<br>- cf[k+1] = *<br>- pf[k+1] = *<br>- tf[k+1] = * |
| CE transaction | <cf,pf,tf,s',a',es,cs><br>solve(c,cf[k],s[k],a[k],n,t) | - m[k+1] = m[k]<br>- s[k+1] = s'<br>- a[k+1] = a'<br>- es[k+1] = es<br>- cs[k+1] = cs<br>- cf[k+1] = cf<br>- pf[k+1] = pf<br>- tf[k+1] = tf |
| Extension selection | User input:<br>- subscription: s<br><br>Pre-conditions:<br>- s is a member of es[k] | - m[k+1] = m[k]<br>- s[k+1] = s<br>- a[k+1] = *<br>- es[k+1] = *<br>- cs[k+1] = *<br>- cf[k+1] = 1 |

(continued)

| Transition type | State k | State k+1 |
| --- | --- | --- |
|  |  | - pf[k+1] = 1 |
|  |  | - tf[k+1] = 1 |
| Contraction selection | User input:<br>- subscription: s<br><br>Pre-conditions:<br>- cf[k] = 0<br>- s is a member of cs[k] | - m[k+1] = m[k]<br>- s[k+1] = s<br>- a[k+1] = *<br>- es[k+1] = *<br>- cs[k+1] = *<br>- cf[k+1] = 1<br>- pf[k+1] = 1<br>- tf[k+1] = 1 |
| Internal transition | Pre-conditions:<br>- cf[k] = 1 | - m[k+1] = m[k]<br>- s[k+1] = s[k]<br>- a[k+1] = a[k]<br>- es[k+1] = es[k]<br>- cs[k+1] = *<br>- cf[k+1] = 1<br>- pf[k+1] = 1<br>- tf[k+1] = tf[k] |
| Exit | Pre-conditions:<br>- cf[k] = 1<br>- tf[k] = 1 | - m[k+1] = m[k]<br>- s[k+1] = s[k]<br>- a[k+1] = *<br>- es[k+1] = *<br>- cs[k+1] = *<br>- cf[k+1] = 1<br>- pf[k+1] = 1<br>- tf[k+1] = 1 |

Table 4 below shows the semantics of the configuration method:

Table 4. Semantics of the configuration method <cf',pf,tf,s',a',es,cs> solve(c,cf,s,a,n,t).

```
if(cf==1 or (s is consistent))
{
                                cf' := 1;
                                pf :=1;
                                s' := consistent closure of s
                                extending labelling of s with label 'c'
                                for each arc in s'\s;
                                a' := anti-subscription of s';
                                es := a set of TOC arc-extensions of
                                s' such that:
- for every extension s" in es, every arc in s"\s' has label 'p' if
it is part of the catalogue c or label 'u' otherwise.
- |es|=1 if the time required to compute the first extension is >= t; |es|=n if the time
```

```
required to compute n extensions is <= t; 1<=|es|<n otherwise.
                                if(s' is totally ordered)
                                {
                                                tf := 1;
                                } else {
```

(continued)

```
                                                              tf := 0;
                        }
                        cs = *;
} else {
                        cf := 0;
                        pf := 0;
                        tf := 0;
                        s' := s;
                        a' := a;
                        es := *;
                        cs := a set of maximal relaxations of s' such that:
|cs|=1 if the time required to compute a maximal relaxation is >= t; |cs|=n if the time required to compute n maximal
relaxations including a maximum relaxation is <= t; 1<=|cs|<n otherwise.
}
```

It follows from this specification that:

- No inconsistent subscription can ever be produced in incremental mode and therefore no relaxation computation and selection is ever required. The only possible transitions in incremental mode are represented by grey-shaded arcs (continuous or dashed) in Figure 13. The only possible transitions in batch mode are represented by continuous arcs (grey-shaded or black).
- The final state necessarily corresponds to a TOC subscription.
- Every subscription input to the CE satisfies Rule 6, that is, its source and target graphs arc-extend the source and target precedence graphs of the catalogue induced by its source and target sets.
- Every subscription input to the CE only includes arc labels 'p' and 'u'.

The CE is implemented using Constraint Programming technology to provide the service described above. Constraint Programming has been successfully used in planning, scheduling, resource allocation, routing, bio-informatics, and many other domains. Here problems are primarily stated as *Constraint Satisfaction Problems* (CSP) where the goal is to assign values to variables, in a given set of alternatives, that respect a set of constraints. The basic approach to solve CSP is to use a backtracking search algorithm which interleaves two processes: *constraint propagation* and *labelling.* Constraint propagation is about discarding options that do not lead to any solution of the problem. Labelling consists in choosing an alternative that may lead to a solution.

The Valued Constraint Satisfaction Problem (VCSP) framework is an extension of the CSP framework for solving constraint optimisation problems. It is able to take into account costs, preferences and priorities. Weighted CSP (WCSP) is a specific subclass of VCSP for which the aggregation operator is the ordinary sum. For the feature subscription problem, we consider a further specialisation of WCSP, namely, the Variable Weighted Constraint Satisfaction Problem (VWCSP). This framework covers a wide range of applications. It is particulary suited to model and solve knapsack-like problems where a maximum number of objects have to be selected subject to a set of constraints.

A VWCSP is defined by a set of n "selection variables" $X_1...X_n$, a set of m integer variables $Z_1...Z_m$ and an objective variable $\Omega=SUM(w_iX_i)$ where $w_i$ is some non-negative weight associated to $X_i$. The domain of each selection variable is a subset of {0,1}. At least one selection variable is involved in each constraint and when any one of the selection variables involved in a constraint is instantiated to 0, the constraint is not activated, i.e., it is considered satisfied. In other words, a constraint is only activated if all of its selection variables are instantiated to 1.

A solution to a VWCSP is an instantiation of the variables that satisfies every activated constraint. For instance, a trivial solution to any VWCSP is $X_i=0$ (i=1..n) and $Z_1...Z_m$ taking arbitrary values. The objective is generally to find a maximum solution, that is, a solution that maximises $\Omega$, the sum of the weights of the selection variables which are not instantiated to the rejection value 0. However, searching for a maximum solution is NP-hard. Therefore, in cases when finding a maximum solution is time consuming, we may opt to find one or more maximal solutions. A solution is maximal if it becomes inconsistent when any of its selection variables that was instantiated to 0 is instantiated to 1. It should be noted that a maximum solution is necessarily maximal.

Given a catalogue and a subscription defined from a feature set that satisfies Rule 6, the CE has to perform the following tasks:

(T1) determine the consistency of the input subscription with the input catalogue,

(T2) compute TOC arc-extensions of the input subscription if it is consistent,

(T3) compute the consistent closure of the input subscription if it is consistent,

(T4) compute maximal and maximum relaxations of the input subscription if it is inconsistent.

(T5) compute the anti-subscription of the consistent closure of the input subscription if the latter is consistent.

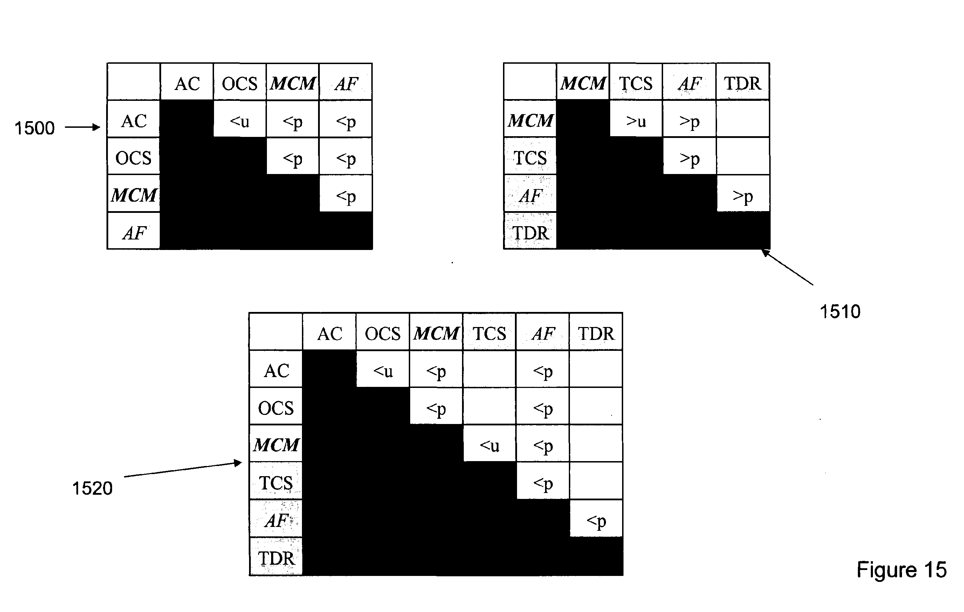

The CE carries out the above tasks using a VWCSP formulation. This formulation relies on a preliminary conversion of the input subscription into a labelled directed graph called "subscription graph". The latter has the set of features of the subscription for set of nodes. Its set of arcs is the set union of the source order with the inverse of the target order of the subscription. In other words, each labelled arc in the source graph is preserved, each labelled arc in the target graph is inversed and duplicate arcs resulting from this process are merged. When duplicate arcs with different labels are merged into one, the label 'p' (i.e., a catalogue constraint) takes precedence over the label 'u' (i.e., a user-defined constraint). Figure 15 shows a schematic depiction of the matrices used in the conversion process. Matrix 1500 shows the source graph of a subscription, matrix 1510 shows the target graph of a subscription and matrix 1520 shows the resulting subscription graph. For example, (<AF,TCS>,'p') becomes (<TCS,AF>,'p') in the subscription graph.

Once the CE has finished manipulating or computing subscription graphs, it converts them back into labelled subscriptions as follows. Firstly, the subscription has for a feature set the node set of the subscription graph. Secondly, each arc <x,y> of the subscription graph that connects two source nodes is converted into an arc <x,y> in the source order and each arc <x,y> that connects two target features is converted into an arc <y,x> in the target order. Labels are preserved. Finally, every arc connecting two non-reversible features, one source, the other target, is simply ignored and not converted.

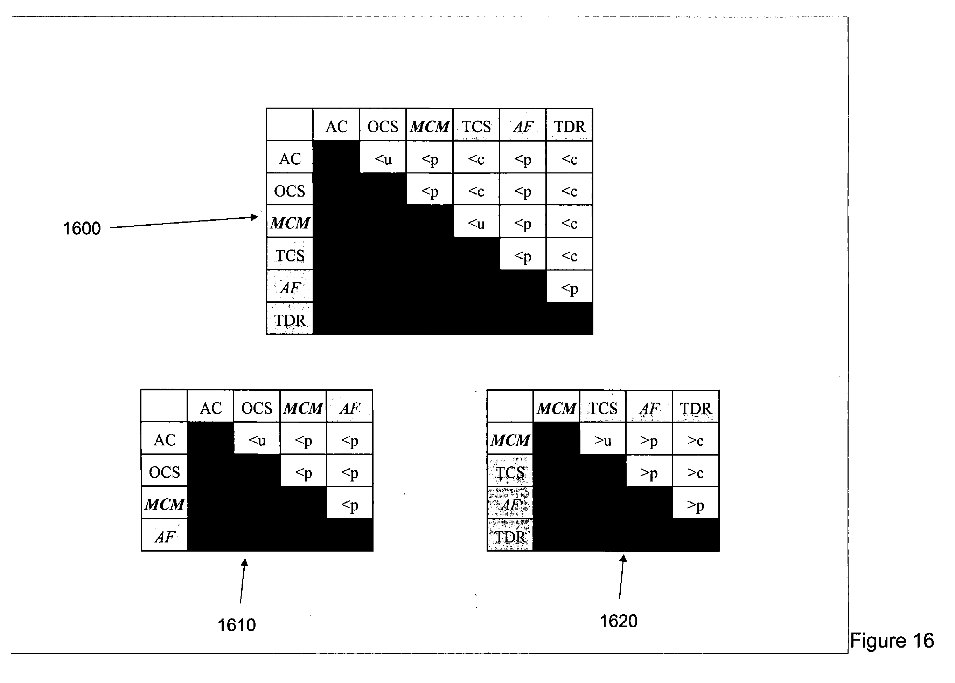

Figure 16 shows a schematic depiction of the matrices in the conversion process in which the subscription graph 1600 may be converted into a source graph 1610 and a target graph 1620. For example, the arc (<AC,TCS>,'c') does not appear in the subscription.

It follows from these definitions/procedures that:

- A subscription satisfying Rule 6 is consistent with a catalogue if, and only if, its subscription graph is acyclic.
- The consistent closure of a consistent subscription is the conversion of the transitive closure of its subscription graph.
- The conversion of a topological sort of the subscription graph associated with a consistent subscription is a TOC arc-extension of the subscription. A TOC arc-extension of a consistent subscription is the conversion of a topological sort of its subscription graph. In general, there is a one-to-many mapping between the set of totally ordered consistent arc-extensions of a consistent subscription and the set of topological sorts of the corresponding subscription graph. That is, different topological sorts may correspond to the same TOC subscription.

The VWCSP instance constructed from a subscription graph is given below where

- F denotes the set of feature nodes of the subscription graph,
- P denotes the set of arcs labelled with 'p' in the subscription graph, and
- U denotes the set of arcs labelled with 'u' in the subscription graph.

Variables and Domains

To each feature node $f_i$ in F is associated

- a selection variable $bf_i$ which is either instantiated to 1 or 0 depending on whether $f_i$ is included in the subscription or not, and
- an integer variable $pf_i$ which represents the position of the feature $f_i$ in the subscription. The domain of $pf_i$ is the set of available positions $\{1,...,m\}$.

Each pair of features $<f_i,f_j>$ in $F^2$ is associated with a boolean variable $bp_{ij}$ which is instantiated to 1 or 0 depending on whether $f_i$ and $f_j$ are both included in the subscription and $f_i$ precedes $f_j$ or not. Each $bp_{ij}$ variable which corresponds to an arc (<$f_i,f_j$>,'u') in U is a selection variable.

Constraints

Each arc (<$f_i,f_j$>,'p') in P corresponds to a precedence constraint from the catalogue and is modelled as follows:

$$bf_i \wedge bf_j \Rightarrow pf_i < pf_j \qquad\qquad (1)$$

Note that the precedence constraint on the right-hand side is only activated if the selection variables $bf_i$ and $bf_j$ are both instantiated to 1.

Each arc ($<f_i,f_j>$,'u') in U corresponds to a user-defined precedence constraint and is modelled as follows:

$$bp_{ij} \Rightarrow bf_i \wedge bf_j \wedge (pf_i < pf_j) \qquad\qquad (2)$$

Note that the inclusion and precedence constraints on the right-hand side are only activated if the selection variable $bp_{ij}$ is intantiated to 1.

The fact that any two features $f_i$ and $f_j$ cannot have the same position in a subscription is modelled as follows:

$$bf_i \wedge bf_j \Rightarrow pf_i \neq pf_j \qquad\qquad (3)$$

Note that the difference constraint on the right-hand side is only activated if the selection variables $bf_i$ and $bf_j$ are both instantiated to 1.

The precedence relations should respect transitivity which is enforced using the following global constraint:

$$TransitiveClosure(bp_{12}, bp_{13,\ldots,} bp_{n(n-2),} bp_{n(n-1)}) \qquad\qquad (4)$$

The semantics of this constraint is: $bp_{ij} \wedge bp_{jk} \Rightarrow bp_{ik}$. This is implemented following the approach described in R. Barták and O.Cepek, "Incremental Filtering Algorithms for Precedence and Dependency Constraints", Proc. 18th IEEE Int Conf on Tools with Artificial Intelligence (ICTAI 2006), pp. 416-423.

<u>Objective function</u>

The objective of finding a preferred relaxation of an inconsistent subscription is modelled as follows:

$$Maximise\ SUM(f_i \in F, bf_i.wf_i) + SUM(p_{ij} \in P, bp_{ij}.wp_{ij}) \qquad\qquad (5)$$

where $wf_i$ is some non-negative weight associated to the selection variable $bf_i$ (i.e., the inclusion of the feature $f_i$ in the subscription) and $wp_{ij}$ is some non-negative weight associated to the selection variable $bp_{ij}$ (i.e., the satisfaction of the user-defined constraint "$f_i$ precedes $f_j$"). By default the weight associated with each boolean variable of each feature and boolean variable of each user precedence is set to 1. However, depending upon the requirements, weights can be adjusted. For example, if it is desired that the system first maximises the number of features and then user precedences, the weight assigned to each feature should be more than the sum of all the weights associated with user-defined precedence constraints.

<u>Task (T1)</u>

In order to determine whether the input subscription is consistent, the CE must determine whether the corresponding subscription graph is acyclic. To this end, it computes arc-consistency on the binary CSP obtained by instantiating all the selection variables of the VWCSP to 1. This CSP consists of the inequalities '$pf_i < pf_j$' and disequalities '$pf_i \neq pf_j$' resulting from the simplification of the constraints of type (1), (2) and (3). Arc-consistency computation is a form of constraint propagation which removes some "inconsistent values" from the domains of variables, i.e., some value assignments that cannot lead to any solution of the CSP. In the case where arc-consistency computation wipes out a domain then the CSP is guaranteed to have no solution.

In the present case, it can be shown that a domain wipe out occurs if, and only if, the input subscription graph is cyclic. In other words, computing arc-consistency on the binary CSP is a correct method for determining the consistency of a subscription. This computation is affordable too since when there are only precedence constraints - a class of monotonic constraints - and disequalities - a class of anti-functional constraints. More precisely, the worst-case time complexity of enforcing arc consistency is $O(e.d)$ where $e$ is the number of constraints and $d$ the maximum domain size of all the variables.

Task (T2)

In order to generate a TOC arc-extension of the input subscription (when consistent), the CE must compute a topological sort of the corresponding subscription graph. To this end, it starts from the binary CSP obtained after computing arc-consistency in (T1). It then runs a backtracking algorithm which labels the position variables (the $pf_i$'s) one after the other and maintains arc-consistency at each node of the search tree. A backtrack-free search is guaranteed and the resulting values for the position variables provide a topological sort of the subscription graph which corresponds to a TOC arc-extension of the input subscription. More topological sorts can be generated by instantiating position variables to different values and the overhead is linear in the number of solutions requested. Note though that different topological sorts may produce the same TOC subscription after conversion. The time complexity of finding all total orders is linear with respect to the number of total orders.

Task (T3)

In order to compute the consistent closure of the input subscription (when consistent), the CE must compute the transitive closure of the corresponding subscription graph. To this end, it runs the filtering algorithm presented in Barták *op cit* on the CSP which is composed of the $bp_{ij}$ variables and the global constraint TransitiveClosure (4) and such that all the selection variables amongst the $bp_{ij}$'s are instantiated to 1. The worst case time complexity of this algorithm is $O(n^3)$ and its space complexity is $O(n^2)$ where $n$ is the number of features in F. The transitive closure of the subscription then corresponds to the set of variables that are instantiated to 1.

Task (T4)

In order to generate maximal relaxations of the input subscription (when inconsistent), the CE solves the VWCSP using a backtrack search procedure. The first maximal relaxation can be found in a backtrack-free manner. However, the CE may have to backtrack to compute additional relaxations. Finding the set of all maximal relaxations is NP-hard. If the CE can generate *n-1* maximal relaxations in the given time limit t, then it looks for a maximum solution in the remaining time. To this end, it solves the VWCSP using branch and bound - a technique to compute optimal solutions for constraint optimisation problems. Branch and bound employs a backtrack search algorithm which stores the value of the best solution found during search and uses it to avoid non-promising search spaces. More precisely, whenever the algorithm encounters a partial solution that cannot be extended into a solution of greater value than the stored best value, the algorithm backtracks instead of trying to extend this solution. Although the worst-case time complexity of the algorithm is exponential, its efficiency can be improved significantly by using search heuristics and constraint propagation techniques and by computing tighter bounds at each node of the search tree. Computing maximum relaxations of an inconsistent subscription is NP-hard. This can be proved by reducing the feedback vertex set problem, which is known to be NP-hard, to the present problem. Given a directed graph <V,E>, the feedback vertex set problem is to find a minimal set of nodes V'⊆V whose deletion makes the graph acyclic. Our reduction consists in associating nodes with features and edges with hard precedence relations

Note that the transitive closure of each maximal subscription is given by the set of $bp_{ij}$ variables instantiated to 1 since the constraint TransitiveClosure is part of the VWCSP and is propagated during search.

Task (T5)

In order to compute the anti-subscription of the consistent closure of the input subscription (when consistent) the CE must create a CSP, which is composed of all the possible $bp_{ij}$ precedence Boolean variables of the catalogue and $bf_i$ feature Boolean variables of the catalogue. The transitive closure of the subscription should be computed by initializing the Boolean variables that are included in the subscription to 1. The anti subscription then corresponds to the set of variables that are instantiated to 0, i.e. the set of features and precedence constraints that would make the input subscription inconsistent if added. The worst time complexity of this function is $n^3$ where $n$ is the number of features in the catalogue.

It will be understood from the foregoing discussion that the present invention will be implemented in software on a general purpose computer, or on a cluster of computing devices. The functionality that enables a computing device to perform the method of the present invention may be provided by providing one or more additional computer programs or applications. It will be understood that such software may be deployed to such a computing device via download, for example via the internet, or on some physical media, for example, DVD, CD-ROM, USB memory stick, etc.

**Claims**

1.  A method of configuring a feature subscription, the method comprising the steps of:

    a) retrieving a feature subscription, the feature subscription comprising one or more features;
    b) configuring the feature subscription;
    c) determining one or more consistent solutions of the feature subscription configured in step b); and
    d) selecting a consistent solution from the one or more consistent solutions determined in step c).

2.  A method according to claim 1, wherein the consistent selection selected in step d) is used to determine the routing of a communication session.

3.  A method according to claim 1 or claim 2 comprising the further step of:

    e) retrieving a feature catalogue; wherein step e) is performed after step a) and before step b).

4.  A method according to claim 3, wherein step b) comprises the steps of

    i) deleting one or more features from the feature subscription; and/or
    ii) adding one or more features from the feature catalogue to the feature subscription.

5.  A method according to any of claims 1 to 3 wherein step b) comprises the step of modifying a feature present in the feature subscription.

6.  A computer program product comprising computer executable code for performing the method of any of claims 1 to 5.

7.  A service configuration system comprising: a user interface, a configuration engine, a catalogue data store and a subscription data store, wherein, in use,

    a feature subscription comprising one or more features is retrieved from the subscription data store;
    the retrieved feature subscription is configured;
    one or more consistent solutions of the configured feature subscription are determined; and
    one of the one or more consistent solutions is selected.

Figure 1

Figure 2

100

120

**Subscription
Configuration
System**

Configuration
Engine

130

Feature
Catalogue
Server

User

User
Interface

Feature
Subscription
Server

Router

110

140

150

Figure 3

S400

S405

S410

S415

S420

S450

S425

S455

S430

S435

S460

S465

S440

S475

Figure 4

EP 2 106 112 A1

|        | AC | OCS | MCM | CFBA | CFB | CFNA | AF | EA |
|--------|----|-----|-----|------|-----|------|----|----|
| AC     | ■  |     | <   | <    | <   | <    | <  | <  |
| OCS    | ■  | ■   | <   | <    | <   | <    | <  | <  |
| MCM    | ■  | ■   | ■   | <    | <   | <    | <  | <  |
| CFBA   | ■  | ■   | ■   | ■    | ◇   |      |    | <  |
| CFB    | ■  | ■   | ■   | ■    | ■   |      |    | <  |
| CFNA   | ■  | ■   | ■   | ■    | ■   | ■    |    | <  |
| AF     | ■  | ■   | ■   | ■    | ■   | ■    | ■  | <  |
| EA     | ■  | ■   | ■   | ■    | ■   | ■    | ■  | ■  |

Figure 5

EP 2 106 112 A1

| | *MCM* | CFU | TA | *CFBA* | *CFB* | *CFNA* | TCS | *AF* | TDR | ODR | *EA* |
|---|---|---|---|---|---|---|---|---|---|---|---|
| *MCM* | | | | | | | | | | | |
| CFU | | | | | | | | | | | |
| TA | | ◇ | | | | | | | | | |
| *CFBA* | < | ◇ | ◇ | | | | | | | | |
| *CFB* | < | ◇ | ◇ | ◇ | | | | | | | |
| *CFNA* | < | ◇ | ◇ | | | | | | | | |
| TCS | | ◇ | ◇ | | | | | | | | |
| *AF* | < | ◇ | ◇ | | | | < | | | | |
| TDR | | ◇ | ◇ | < | < | < | | < | | | |
| ODR | | ◇ | ◇ | < | < | < | | < | | | |
| *EA* | < | ◇ | ◇ | < | < | < | | < | | | |

Figure 6

Figure 7

Figure 8

Figure 9

Figure 10

AC — OCS — *MCM* — TCS — *AF* — TDR

|  | AC | OCS | *MCM* | *AF* |
|---|---|---|---|---|
| AC | ■ |  | < | < |
| OCS | ■ | ■ | < | < |
| *MCM* | ■ | ■ | ■ | < |
| *AF* | ■ | ■ | ■ | ■ |

|  | *MCM* | TCS | *AF* | TDR |
|---|---|---|---|---|
| *MCM* | ■ | ■ | ■ | ■ |
| TCS | > | ■ | ■ | ■ |
| *AF* | < | < | ■ | ■ |
| TDR | < | < | < | ■ |

Figure 11

EP 2 106 112 A1

EP 2 106 112 A1

1210

1220

1200

Semantics (i<j)

•<p built-in precedence
•<u user-def precedence
•<c inferred precedence

|   | AC |
|---|---|
| AC |  |

➢sfa AC
OK: s=AC
OK: t=()
➢

|   | AC | OCS |
|---|---|---|
| AC |  | <u |
| OCS |  |  |

➢sfa OCS
s={AC,OCS}
OK: t=()
➢ saa s AC OCS
OK: s=AC<OCS
OK: t=()
➢

|   | AC | OCS | MCM |
|---|---|---|---|
| AC |  | <u | <p |
| OCS |  |  | <p |
| MCM |  |  |  |

➢sfa MCM
OK: s=AC<OCS<MCM
OK: t=MCM
➢

|   | AC | OCS | MCM | AF |
|---|---|---|---|---|
| AC |  | <u | <p | <p |
| OCS |  |  | <p | <p |
| MCM |  |  |  | <p |
| AF |  |  | <p |  |

➢ sfa AF
OK: s=AC<OCS<MCM<AF
OK: t=AF<MCM
➢

1230

|   | AC | OCS | MCM | TCS | AF | TDR |
|---|---|---|---|---|---|---|
| AC |  | <u | <p |  | <p |  |
| OCS |  |  | <p |  | <p |  |
| MCM |  |  |  |  | <p |  |
| TCS |  |  | <u |  |  |  |
| AF |  |  | <p | <p |  |  |
| TDR |  |  | <c | <c | <p |  |

➢ sfa TDR
OK: s=AC<OCS<MCM<AF
OK: t=TDR<AF<TCS<MCM
➢

1250

|   | AC | OCS | MCM | TCS | AF |
|---|---|---|---|---|---|
| AC |  | <u | <p |  | <p |
| OCS |  |  | <p |  | <p |
| MCM |  |  |  |  | <p |
| TCS |  |  | <u |  |  |
| AF |  |  | <p | <p |  |

➢ sfa TCS
OK: s=AC<OCS<MCM<AF
t={TCS,AF,MCM}
➢ saa t TCS MCM
OK: s=AC<OCS<MCM<AF
OK: t=AF<TCS<MCM
➢

1240

Figure 12

Figure 13

|  | AC | OCS | *MCM* | *AF* |
|---|---|---|---|---|
| AC |  | <u | <p | <p |
| OCS |  |  | <p | <p |
| *MCM* |  |  |  | <p |
| *AF* |  |  |  |  |

|  | *MCM* | TCS | *AF* | TDR |
|---|---|---|---|---|
| *MCM* |  |  |  |  |
| TCS | <u |  |  |  |
| *AF* | <p | <p |  |  |
| TDR | <c | <c | <p |  |

Figure 14

Figure 15

**1500**

| | AC | OCS | *MCM* | *AF* |
|---|---|---|---|---|
| AC | | <u | <p | <p |
| OCS | | | <p | <p |
| *MCM* | | | | <p |
| *AF* | | | | |

**1510**

| | *MCM* | TCS | *AF* | TDR |
|---|---|---|---|---|
| *MCM* | | >u | >p | |
| TCS | | | >p | |
| *AF* | | | | >p |
| TDR | | | | |

**1520**

| | AC | OCS | *MCM* | TCS | *AF* | TDR |
|---|---|---|---|---|---|---|
| AC | | <u | <p | | <p | |
| OCS | | | <p | | <p | |
| *MCM* | | | | <u | <p | |
| TCS | | | | | <p | |
| *AF* | | | | | | <p |
| TDR | | | | | | |

1600

| | AC | OCS | MCM | TCS | AF | TDR |
|---|---|---|---|---|---|---|
| AC | | <u | <p | <c | <p | <c |
| OCS | | | <p | <c | <p | <c |
| MCM | | | | <u | <p | <c |
| TCS | | | | | <p | <c |
| AF | | | | | | <p |
| TDR | | | | | | |

| | AC | OCS | MCM | AF |
|---|---|---|---|---|
| AC | | <u | <p | <p |
| OCS | | | <p | <p |
| MCM | | | | <p |
| AF | | | | |

1610

| | MCM | TCS | AF | TDR |
|---|---|---|---|---|
| MCM | | >u | >p | >c |
| TCS | | | >p | >c |
| AF | | | | >p |
| TDR | | | | |

1620

Figure 16

**European Patent Office**

**EUROPEAN SEARCH REPORT**

Application Number

EP 08 25 1040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZIMMER P. A.: "Prioritizing Features Through Categorization: An Approach to Resolving Feature Interactions" ELECTRONIC THESES AND DISSERTATIONS UNIVERSITY OF WATERLOO, [Online] 27 September 2007 (2007-09-27), XP002493079 Waterloo, Ontario, Canada, Retrieved from the Internet: URL:http://hdl.handle.net/10012/3350> [retrieved on 2008-08-18] * page 2, paragraph 3 - page 6, paragraph 2 * * page 9, paragraph 1 - page 25, paragraph 1 * * page 31, paragraph 5 - page 32, paragraph 3 * * page 34, paragraph 4 * * page 36, paragraphs 4,5 * * page 48, paragraph 4 - page 59, paragraph 3 * | 1-7 | INV. H04M3/42 |
| A | US 6 990 185 B1 (ZAVE PAMELA [US] ET AL) 24 January 2006 (2006-01-24) * the whole document * | 1-7 | TECHNICAL FIELDS SEARCHED (IPC) H04M |
| A | US 6 160 883 A (JACKSON MICHAEL ANTHONY [GB] ET AL) 12 December 2000 (2000-12-12) * the whole document * | 1-7 | |

The present search report has been drawn up for all claims

| Place of search | Date of completion of the search | Examiner |
|---|---|---|
| Munich | 26 August 2008 | Tillgren, Mattias |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 25 1040

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2008

| Patent document cited in search report | | Publication date | Patent family member(s) | | Publication date |
|---|---|---|---|---|---|
| US 6990185 | B1 | 24-01-2006 | NONE | | |
| US 6160883 | A | 12-12-2000 | US | 6404878 B1 | 11-06-2002 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. Barták ; O.Cepek.** Incremental Filtering Algorithms for Precedence and Dependency Constraints. *Proc. 18th IEEE Int Conf on Tools with Artificial Intelligence (ICTAI 2006),* 2006, 416-423